# EUROPÄISCHE PATENTSCHRIFT

(11) **EP 4 143 949 B1**
(45) Veröffentlichungstag und Bekanntmachung des Hinweises auf die Patenterteilung: **11.06.2025**
(21) Anmeldenummer: 21715181.0
(22) Anmeldetag: 22.03.2021
(51) Int. Cl.: H02K 1/16, H02K 15/02

(54) **STATOR EINER ELEKTRISCHEN MASCHINE**
STATOR OF AN ELECTRIC MACHINE
STATOR D'UNE MACHINE ÉLECTRIQUE

(30) Priorität: 29.04.2020 DE 102020205448
(43) Veröffentlichungstag der Anmeldung: 08.03.2023
(73) Patentinhaber: Robert Bosch GmbH, 70442 Stuttgart (DE)
(72) Erfinder: KUEHBACHER, Daniel, 70569 Stuttgart (DE); BENSING, Felix, 70437 Stuttgart (DE)
(86) Internationale Anmeldenummer: PCT/EP2021/057218
(87) Internationale Veröffentlichungsnummer: WO 2021/219293

(56) Entgegenhaltungen:
- WO-A1-2019/142663
- FR-A1- 2 494 926
- US-A1- 2011 133 580

## Beschreibung

### Stand der Technik

Die Erfindung geht aus von einem Stator einer elektrischen Maschine nach der Gattung des Anspruchs 1.

Es ist schon ein Stator einer elektrischen Maschine aus der US2012256512 A1 bekannt, mit einem eine Statorachse aufweisenden Statorblechpaket, das eine Vielzahl von Statorzähnen und eine Vielzahl von zwischen den Statorzähnen gebildeten Statornuten umfasst und durch eine Vielzahl von gestapelten Statorlamellen gebildet ist, und mit elektrischen Leiterelementen, die durch die Statornuten des Statorblechpakets verlaufen und zur Bildung einer elektrischen Wicklung, insbesondere einer Steckwicklung, vorgesehen sind, wobei in den Statornuten jeweils eine Nutisolation, insbesondere ein Nutisolationspapier, zur elektrischen Isolation der Leiterelemente gegenüber dem Statorblechpaket vorgesehen ist, wobei die Statorlamellen jeweils eine Vielzahl von Lamellenzähnen und jeweils ein die Lamellenzähne verbindendes Lamellenjoch aufweisen, wobei die Statorzähne des Statorblechpakets jeweils durch gestapelte Lamellenzähne der Statorlamellen gebildet sind.

In den Statornuten stellt sich jeweils ein Spalt zwischen den Leiterelementen und dem Statorblechpaket bzw. zwischen den Leiterelementen und der jeweiligen Nutisolation ein, der u.a. abhängig ist von der Herstelltoleranz der Breite der Statornuten und der Herstelltoleranz der Breite der Leiterelemente. Dieser Spalt, der ein Luftspalt ist, ggf. gefüllt mit einem Imprägniermittel, verschlechtert den Wärmeübergang von den Leiterelementen auf das Statorblechpaket.

Die Merkmale des Oberbegriffs von Anspruch 1 gehen aus der WO 2019 142 663 A1 hervor.

### Vorteile der Erfindung

Der erfindungsgemäße Stator der elektrischen Maschine mit den kennzeichnenden Merkmalen des Hauptanspruchs hat demgegenüber den Vorteil, dass der Wärmeübergang von den Leiterelementen auf das Statorblechpaket und damit die Kühlung der elektrischen Wicklung verbessert wird. Infolgedessen kann die Leistung der elektrischen Maschine erhöht werden. Darüber hinaus wird auch die mechanische Fixierung der Leiterelemente in der Statornut verbessert, so dass in der Statornut eine Imprägnierung der Leiterelemente entfallen könnte. Weiterhin können die Herstelltoleranzen für die Statorlamellen und für die Leiterelemente aufgeweitet werden, so dass sich die Herstellkosten für den Stator verringern.

Diese Vorteile werden durch einen Stator gemäss Anspruch 1 erreicht. Es ist erfindungsgemäss im Statorblechpaket zumindest eine Statorlamelle vorgeshen, die in Umfangsrichtung bezüglich der Statorachse gegenüber anderen der Statorlamellen des Statorblechpakets derart verdreht ist, dass sie in jeder Statornut des Statorblechpakets mit einem Lamellenzahnabschnitt eines der Lamellenzähne in die jeweilige Statornut vorsteht. Durch die vorstehenden Lamellenzahnabschnitte werden in den Statornuten vorstehende Rippen gebildet, die gar keinen oder nur noch einen kleinen Spalt zu den Leiterelementen aufweisen.

Durch die in den Unteransprüchen aufgeführten Maßnahmen sind vorteilhafte Weiterbildungen und Verbesserungen des im Hauptanspruch angegebenen Stators möglich.

Vorteilhaft ist, dass die jeweilige verdrehte Statorlamelle in jeder Statornut jeweils an einem der beiden die jeweilige Statornut begrenzenden Statorzähne mit dem Lamellenzahnabschnitt in die jeweilige Statornut vorsteht und dass an dem anderen die jeweilige Statornut begrenzenden Statorzahn eine Vertiefung mit einer dem vorstehenden Lamellenzahnabschnitt entsprechenden Negativkontur gebildet ist.

Erfindungsgemäss vorgesehen ist, dass im Statorblechpaket mehrere Statorlamellen in Umfangsrichtung bezüglich der Statorachse gegenüber anderen der Statorlamellen des Statorblechpakets verdreht sind, nämlich in die gleiche Verdrehrichtung. Auf diese Weise werden der Wärmeübergang von den Leiterelementen auf das Statorblechpaket und auch die mechanische Fixierung der Leiterelemente in der jeweiligen Statornut noch weiter verbessert.

Weiterhin erfindungsgemäss vorgesehen ist, dass die mehreren verdrehten Statorlamellen im Statorblechpaket in mehreren voneinander beabstandeten Gruppen von aneinanderliegenden Statorlamellen angeordnet sind, wobei zwischen zwei Gruppen von verdrehten Statorlamellen jeweils eine oder mehrere nicht verdrehte Statorlamellen liegen.

Nach einem ersten Ausführungsbeispiel sind die mehreren verdrehten Statorlamellen im Statorblechpaket in mehreren, voneinander beabstandeten Gruppen von aneinanderliegenden Statorlamellen angeordnet, wobei zwischen zwei Gruppen von verdrehten Statorlamellen jeweils eine oder mehrere nicht verdrehte Statorlamellen liegen.

Nach einem zweiten Ausführungsbeispiel sind die mehreren verdrehten Statorlamellen im Statorblechpaket vereinzelt angeordnet, wobei zwischen zwei verdrehten Statorlamellen jeweils eine oder mehrere nicht verdrehte Statorlamellen liegen.

Auch erfindungsgemäss vorgesehen ist, dass die mehreren verdrehten Statorlamellen des Statorblechpakets alle um denselben Verdrehwinkel verdreht sind. Auf diese Weise wird entweder ein ungeschrägter Stator erreicht.

Des Weiteren vorteilhaft ist, wenn die mit den Leiterelementen versehenen Statornuten Hohlräume aufweisen, die zumindest teilweise mit einem Imprägniermittel befüllt sind.

Darüber hinaus vorteilhaft ist, wenn die Statorlamellen des Statorblechpaketes miteinander gefügt, insbesondere verschweißt, sind und/oder am Außenumfang mit einem Statorgehäuse der elektrischen Maschine einen Pressverband bilden, und/oder in axialer Richtung bezüglich der Statorachse zwischen zwei Lagerschilden der elektrischen Maschine eingespannt sind. Auf diese Weise werden die Statorlamellen des Statorblechpaketes in ihrer Lage fixiert.

In einem nicht zur beanspruchten Erfindung gehörenden Verfahren zur Herstellung des Stators oder der elektrischen Maschine ist vorgesehen, dass nach dem Einführen der Leiterelemente und vor dem Fixieren der Statorlamellen zumindest eine Statorlamelle des Statorblechpakets in Umfangsrichtung bezüglich der Statorachse gegenüber anderen der Statorlamellen des Statorblechpakets derart verdreht wird, dass diese in jeder Statornut des Statorblechpakets mit einem Lamellenzahnabschnitt eines der Lamellenzähne in die jeweilige Statornut vorsteht.

### Zeichnung

Zwei Ausführungsbeispiele der Erfindung sind in der Zeichnung vereinfacht dargestellt und in der nachfolgenden Beschreibung näher erläutert.
- Fig.1: zeigt einen Stator einer elektrischen Maschine,
- Fig.2: eine Teilansicht des Stators nach Fig.1 in einem unfertigen Zustand,
- Fig.3: eine Schnittansicht eines Schnitts durch das unfertige Statorblechpaket entlang der Schnittlinie III-III in Fig.2,
- Fig.4: eine Teilansicht eines ersten Ausführungsbeispiels des erfindungsgemäßen Stators nach Fig.1,
- Fig.5: eine Schnittansicht eines Schnitts durch das Statorblechpaket entlang der Schnittlinie V-V nach Fig.4,
- Fig.6: eine Teilansicht eines nicht zur Erfindung gehörenden Stators nach Fig.1 und
- Fig.7: eine Schnittansicht eines Schnitts durch das Statorblechpaket entlang der Schnittlinie VII-VII nach Fig.6.

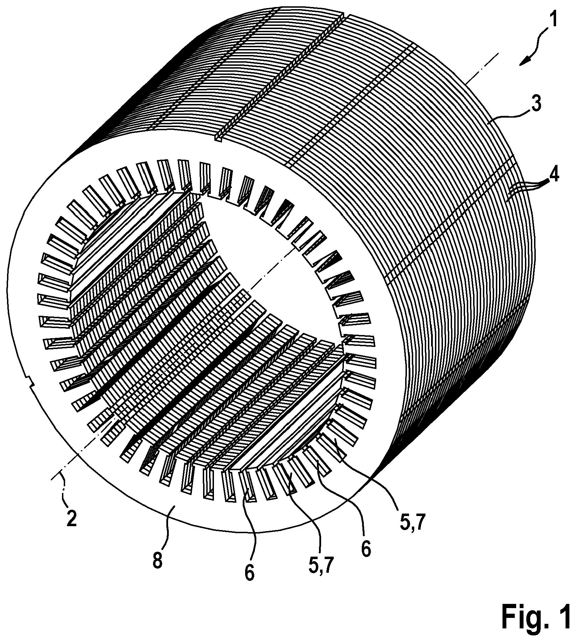

Fig.1 zeigt einen Stator.

Der Stator 1 einer elektrischen Maschine umfasst zumindest ein Statorblechpaket 3, das aus einem Stapel von Statorlamellen 4 gebildet ist und eine Statorachse 2 hat. Der Stator 1 bzw. das Statorblechpaket 3 weist eine Vielzahl von Statorzähnen 5 und eine Vielzahl von zwischen den Statorzähnen 5 angeordneten Statornuten 6 auf. Dabei sind die Statornuten 6 jeweils zwischen zwei Statorzähnen 5 gebildet.

Die Statorlamellen 4 weisen jeweils eine Vielzahl von Lamellenzähnen 7 und jeweils ein Lamellenjoch 8 auf, das die Lamellenzähne 7 miteinander verbindet. Die Statorzähne 5 des Statorblechpakets 3 werden jeweils durch gestapelte Lamellenzähne 7 der Statorlamellen 4 gebildet.

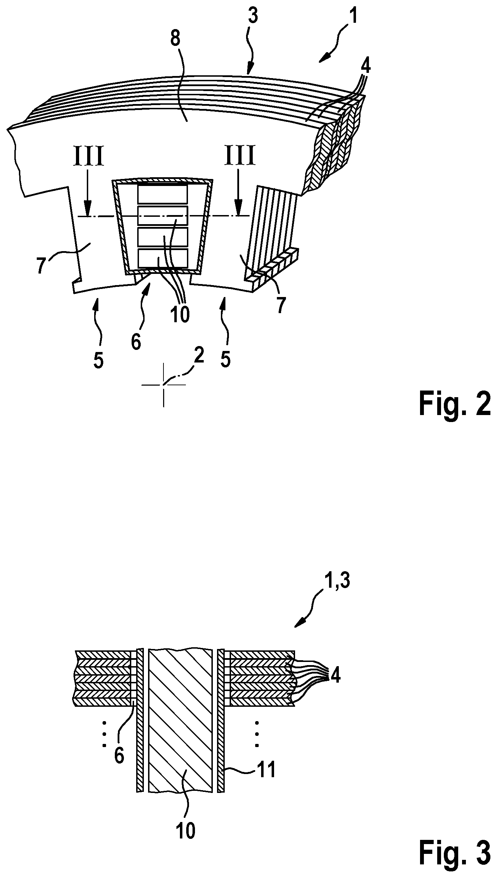

Fig.2 zeigt eine Teilansicht des Stators nach Fig.1 in einem unfertigen Zustand, in dem die Statorlamellen 4 noch lose aufeinanderliegen und alle Lamellenzähne 7 eines jeden einzelnen Statorzahns 5 des Statorblechpakets 3 zueinander fluchtend angeordnet sind, wie in der Schnittansicht nach Fig.3 erkennbar.

Die Fig.3 zeigt eine Schnittansicht gemäß einem Schnitt durch das unfertige Statorblechpaket 3 entlang der Schnittlinie III-III in Fig.2.

Der Stator 1 umfasst weiterhin elektrische Leiterelemente 10, die durch die Statornuten 6 des Statorblechpakets 3 verlaufen und zur Bildung einer elektrischen Wicklung, beispielsweise einer Steckwicklung, vorgesehen sind. Die Leiterelemente 10 haben beispielsweise jeweils einen viereckigen, insbesondere rechteckigen, Querschnitt und sind beispielsweise als sogenannte Hairpins oder als sogenannte I-Pins ausgeführt.

In den Statornuten 6 ist beispielsweise jeweils eine Nutisolation 11, beispielsweise ein Nutisolationspapier, zur elektrischen Isolation der Leiterelemente 10 gegenüber dem Statorblechpaket 3 vorgesehen.

Die mit den Leiterelementen 10 versehenen Statornuten 6 weisen Hohlräume 9 auf, die im fertigen Zustand des Stators 1 zumindest teilweise mit einem Imprägniermittel 16 befüllt sein können.

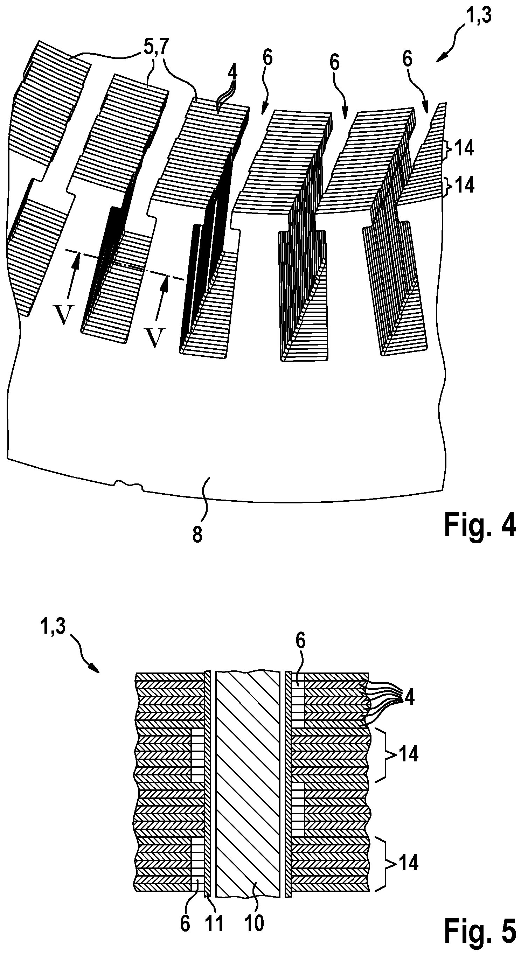

Fig.4 zeigt eine Teilansicht eines ersten Ausführungsbeispiels des erfindungsgemäßen Stators nach Fig.1.

Fig.5 zeigt eine Schnittansicht eines Schnitts durch das Statorblechpaket entlang der Schnittlinie V-V in Fig.4, wobei in der Schnittansicht ergänzend die Nutisolation 11 und eines der Leiterelemente 10 gezeigt ist.

Erfindungsgemäß ist vorgesehen, dass im Statorblechpaket 3 zumindest eine Statorlamelle 4 vorgesehen ist, die in Umfangsrichtung bezüglich der Statorachse 2 gegenüber anderen der Statorlamellen 4 des Statorblechpakets 3 derart verdreht ist, dass sie in jeder Statornut 6 des Statorblechpakets 3 mit einem Lamellenzahnabschnitt 12 eines der Lamellenzähne 7 in die jeweilige Statornut 6 vorsteht.

Die jeweilige verdrehte Statorlamelle 4 steht in jeder Statornut 6 jeweils an einem der beiden die jeweilige Statornut 6 begrenzenden Statorzähne 5 mit dem Lamellenzahnabschnitt 12 in die jeweilige Statornut 6 vor und an dem anderen die jeweilige Statornut 6 begrenzenden Statorzahn 5 ist eine Vertiefung 13 mit einer dem vorstehenden Lamellenzahnabschnitt 12 entsprechenden Negativkontur gebildet.

Gemäß den Fig.4 bis Fig.7 sind im Statorblechpaket 3 mehrere Statorlamellen 4 in Umfangsrichtung bezüglich der Statorachse 2 gegenüber anderen der Statorlamellen 4 des Statorblechpakets 3 verdreht, beispielsweise in die gleiche Verdrehrichtung.

Nach dem ersten Ausführungsbeispiel nach Fig.4 und Fig.5 sind die mehreren verdrehten Statorlamellen 4 im Statorblechpaket 3 in mehreren voneinander beabstandeten Gruppen 14 von aneinanderliegenden Statorlamellen 4 angeordnet, wobei zwischen zwei Gruppen 14 von verdrehten Statorlamellen 4 jeweils eine oder mehrere nicht verdrehte Statorlamellen 4 liegen.

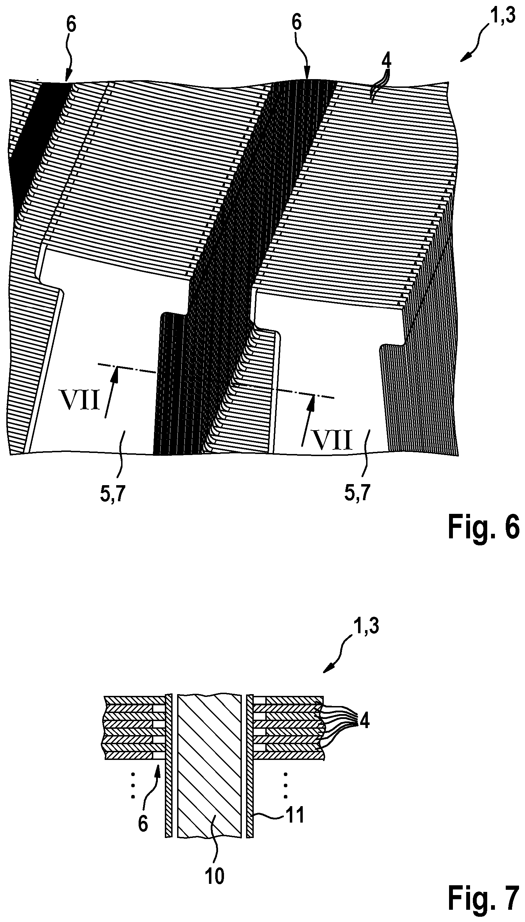

Fig.6 zeigt eine Teilansicht eines nicht zur Erfindung gehörenden Stators nach Fig.1.

Fig.7 zeigt eine Schnittansicht eines Schnitts durch das Statorblechpaket entlang der Schnittlinie VII-VII in Fig.6, wobei in der Schnittansicht ergänzend die Nutisolation 11 und eines der Leiterelemente 10 gezeigt ist.

Es sind die mehreren verdrehten Statorlamellen 4 im Statorblechpaket 3 vereinzelt angeordnet, wobei zwischen zwei verdrehten Statorlamellen 4 jeweils eine oder mehrere nicht verdrehte Statorlamellen 4 liegen.

Die mehreren verdrehten Statorlamellen 4 des Statorblechpakets 3 sind beispielsweise alle um denselben Verdrehwinkel verdreht. Zur Erzielung eines geschrägten Stators 1 können die mehreren verdrehten Statorlamellen 4 des Statorblechpakets 3 alternativ auch jeweils um einen unterschiedlichen, in axialer Richtung bezüglich der Statorachse 2 zunehmenden Verdrehwinkel verdreht sein.

Zur Herstellung eines nicht zur Erfindung gehörenden Stators 1 werden die folgenden Schritte durchgeführt:
a. Stapeln der Statorlamellen 4 zu einem Statorblechpaket 3,
b. Optional Einführen der Nutisolation 11 in die Statornuten 6,
c. Einführen der Leiterelemente 10 in die jeweiligen Statornuten 6,
d. Fixieren der Statorlamellen 4 des Statorblechpakets 3, beispielsweise Fügen, insbesondere Verschweißen der Statorlamellen 4.

Es wird zeitlich betrachtet nach dem Einführen der Leiterelemente 10 (Schritt c) und vor dem Fixieren der Statorlamellen 4 (Schritt d) zumindest eine Statorlamelle 4, beispielsweise mehrere Statorlamellen 4, des Statorblechpakets 3 in Umfangsrichtung bezüglich der Statorachse 2 gegenüber anderen der Statorlamellen 4 des Statorblechpakets 3 derart verdreht, dass diese in jeder Statornut 6 des Statorblechpakets 3 mit einem Lamellenzahnabschnitt 12 eines der Lamellenzähne 7 in die jeweilige Statornut 6 vorsteht.

## Patentansprüche

1. Stator einer elektrischen Maschine mit einem eine Statorachse (2) aufweisenden Statorblechpaket (3), das eine Vielzahl von Statorzähnen (5) und eine Vielzahl von zwischen den Statorzähnen (5) gebildeten Statornuten (6) umfasst und durch eine Vielzahl von gestapelten Statorlamellen (4) gebildet ist, und mit elektrischen Leiterelementen (10), die durch die Statornuten (6) des Statorblechpakets (3) verlaufen und zur Bildung einer elektrischen Wicklung, insbesondere einer Steckwicklung, vorgesehen sind, wobei in den Statornuten (6) jeweils eine Nutisolation (11), insbesondere ein Nutisolationspapier, zur elektrischen Isolation der Leiterelemente (10) gegenüber dem Statorblechpaket (3) vorgesehen ist, wobei die Statorlamellen (4) jeweils eine Vielzahl von Lamellenzähnen (7) und jeweils ein die Lamellenzähne (7) verbindendes Lamellenjoch (8) aufweisen, wobei die Statorzähne (5) des Statorblechpakets (3) jeweils durch gestapelte Lamellenzähne (7) der Statorlamellen (4) gebildet sind, wobei im Statorblechpaket (3) mehrere Statorlamellen (4) vorgesehen sind, die in Umfangsrichtung bezüglich der Statorachse (2) gegenüber anderen der Statorlamellen (4) des Statorblechpakets (3) derart in die gleiche Verdrehrichtung verdreht sind, dass sie in jeder Statornut (6) des Statorblechpakets (3) jeweils mit einem Lamellenzahnabschnitt (12) eines der Lamellenzähne (7) in die jeweilige Statornut (6) vorstehen, wobei die mehreren verdrehten Statorlamellen (4) im Statorblechpaket (3) in mehreren voneinander beabstandeten Gruppen (14) von aneinanderliegenden Statorlamellen (4) angeordnet sind, wobei zwischen zwei Gruppen (14) von verdrehten Statorlamellen (4) jeweils eine oder mehrere nicht verdrehte Statorlamellen (4) liegen,
**dadurch gekennzeichnet, dass**
die mehreren verdrehten Statorlamellen (4) des Statorblechpakets (3) alle um denselben Verdrehwinkel verdreht sind.

2. Stator nach Anspruch 1, **dadurch gekennzeichnet, dass** die jeweilige verdrehte Statorlamelle (4) in jeder Statornut (6) jeweils an einem der beiden die jeweilige Statornut (6) begrenzenden Statorzähne (5) mit dem Lamellenzahnabschnitt (12) in die jeweilige Statornut (6) vorsteht und dass an dem anderen die jeweilige Statornut (6) begrenzenden Statorzahn (5) eine Vertiefung (13) mit einer dem vorstehenden Lamellenzahnabschnitt (12) entsprechenden Negativkontur gebildet ist.

3. Stator nach einem der vorhergehenden Ansprüche, **dadurch gekennzeichnet, dass** die mit den Leiterelementen (10) versehenen Statornuten (6) Hohlräume (9) aufweisen, die zumindest teilweise mit einem Imprägniermittel (16) befüllt sind.

4. Stator nach einem der vorhergehenden Ansprüche, **dadurch gekennzeichnet, dass** die Leiterelemente (10) jeweils einen viereckigen, insbesondere rechteckigen, Querschnitt aufweisen und als Hairpin oder als I-Pin ausgebildet sind.

5. Elektrische Maschine mit einem Stator nach einem der vorhergehenden Ansprüche, **dadurch gekennzeichnet, dass** die Statorlamellen (4) des Statorblechpaketes (3) miteinander gefügt, insbesondere verschweißt, sind und/oder am Außenumfang mit einem Statorgehäuse (20) einen Pressverband bilden, und/oder in axialer Richtung bezüglich der Statorachse (2) zwischen zwei Lagerschilden des Statorgehäuses (20) eingespannt sind.

## Claims

1. Stator of an electric machine, comprising a laminated stator core (3), which has a stator axis (2), comprises a plurality of stator teeth (5) and a plurality of stator slots (6) formed between the stator teeth (5), and is formed by a plurality of stacked stator laminations (4); and comprising electrical conductor elements (10), which run through the stator slots (6) of the laminated stator core (3) and are provided in order to form an electrical winding, in particular a plugin winding, wherein a slot insulation (11), in particular a slot insulation paper, is provided in each of the stator slots (6) in order to electrically insulate the conductor elements (10) from the laminated stator core (3), wherein the stator laminations (4) each have a plurality of lamination teeth (7) and a lamination yoke (8), which connects the lamination teeth (7), wherein the stator teeth (5) of the laminated stator core (3) are each formed by stacked lamination teeth (7) of the stator laminations (4), wherein a plurality of stator laminations (4) are provided in the laminated stator core (3) and are rotated relative to other stator laminations (4) of the laminated stator core (3) in the same direction of rotation in the peripheral direction with respect to the stator axis (2) in such a way that, in each stator slot (6) of the laminated stator core (3), they each protrude by way of a lamination tooth portion (12) of one of the lamination teeth (7) into the respective stator slot (6), wherein the plurality of rotated stator laminations (4) in the laminated stator core (3) are arranged in a plurality of spaced-apart groups (14) of stator laminations (4) which bear against each other, wherein one or more non-rotated stator laminations (4) are situated between in each case two groups (14) of rotated stator laminations (4), **characterized in that**
the plurality of rotated stator laminations (4) of the laminated stator core (3) are all rotated through the same angle of rotation.

2. Stator according to Claim 1, **characterized in that** the respective rotated stator lamination (4) in each stator slot (6) protrudes in each case from one of the two stator teeth (5) delimiting the respective stator slot (6) and having the lamination tooth portion (12) into the respective stator slot (6), and **in that** a recess (13) with a negative contour corresponding to the preceding lamination tooth portion (12) is formed on the other stator tooth (5) delimiting the respective stator slot (6).

3. Stator according to either of the preceding claims, **characterized in that** the stator slots (6) provided with the conductor elements (10) have cavities (9) which are at least partially filled with an impregnating agent (16).

4. Stator according to any of the preceding claims, **characterized in that** the conductor elements (10) each have a square, in particular rectangular, cross section and are designed as a hairpin or as an I-pin.

5. Electric machine comprising a stator according to any of the preceding claims, **characterized in that** the stator laminations (4) of the laminated stator core (3) are joined, in particular welded, to each other and/or on the outer circumference form a press-fit with a stator housing (20), and/or are clamped between two end plates of the stator housing (20) in the axial direction with respect to the stator axis (2).

## Revendications

1. Stator d'une machine électrique, comprenant un noyau de stator stratifié (3) qui est doté d'un axe de stator (2) et comprend une pluralité de dents de stator (5) et une pluralité de fentes de stator (6) formées entre les dents de stator (5), et qui est formé par une pluralité de tôles de stator empilées (4), et comprenant des éléments conducteurs électriques (10) qui s'étendent à travers les fentes de stator (6) du noyau de stator stratifié (3) et qui sont conçus pour former un enroulement électrique, plus particulièrement un enroulement enfichable, dans lequel, dans chacune des fentes de stator (6), un isolateur de fente (11), plus particulièrement un papier d'isolation de fente, est prévu afin d'isoler électriquement les éléments conducteurs (10) du noyau de stator stratifié (3), les tôles de stator (4) présentant respectivement une pluralité de dents de tôle (7) et une culasse de tôle (8), qui relie les dents de tôle (7), les dents de stator (5) du noyau de stator stratifié (3) étant respectivement formées par des dents de tôle (7) empilées des tôles de stator (4), de multiples tôles de stator (4) étant prévues dans le noyau de stator stratifié (3), lesquelles sont entraînées en rotation dans la direction périphérique par rapport à l'axe de stator (2), par rapport à l'autre des tôles de stator (4) du noyau de stator stratifié (3), de telle sorte que, dans chaque fente de stator (6) du noyau de stator stratifié (3), une partie de dent de tôle (12) de l'une des dents de tôle (7) de ladite tôle de stator fait saillie dans la fente de stator (6), les multiples tôles de stator mises en rotation (4) dans le noyau de stator stratifié (3) étant disposées en plusieurs groupes (14) espacés les uns des autres de tôles de stator adjacentes (4), avec une ou plusieurs tôles de stator non mises en rotation (4) entre deux groupes (14) de tôles de stator mises en rotation (4),
**caractérisé en ce que**
les multiples tôles de stator mises en rotation (4) du noyau de stator stratifié (3) sont toutes mises en rotation du même angle de rotation.

2. Stator selon la revendication 1, **caractérisé en ce que** la tôle de stator (4) respective mise en rotation fait saillie dans chaque fente de stator (6) respectivement sur l'une des deux dents de stator (5) délimitant la fente de stator (6) respective avec la partie de dent de tôle (12) dans la fente de stator (6) respective, et **en ce qu'**un creux (13) présentant un contour négatif correspondant à la partie de dent de tôle (12) saillante est formé sur l'autre dent de stator (5) délimitant la fente de stator (6) respective.

3. Stator selon l'une des revendications précédentes, **caractérisé en ce que** les fentes de stator (6) munies des éléments conducteurs (10) présentent des cavités (9) qui sont au moins partiellement remplies d'un agent d'imprégnation (16).

4. Stator selon l'une des revendications précédentes, **caractérisé en ce que** les éléments conducteurs (10) présentent respectivement une section transversale quadrilatérale, notamment rectangulaire, et sont réalisés sous forme d'épingle à cheveux ou de broche en 1.

5. Machine électrique comprenant un stator selon l'une des revendications précédentes, **caractérisée en ce que** les tôles de stator (4) du noyau de stator stratifié (3) sont jointes entre elles, notamment soudées, et/ou forment un assemblage serti sur la circonférence extérieure avec un boîtier de stator (20), et/ou sont serrées dans la direction axiale par rapport à l'axe de stator (2) entre deux flasques de palier du boîtier de stator (20).
